(19) Europäisches Patentamt / European Patent Office / Office européen des brevets

(11) **EP 2 693 179 A1**

(12) **EUROPEAN PATENT APPLICATION**
published in accordance with Art. 153(4) EPC

(43) Date of publication:
**05.02.2014 Bulletin 2014/06**

(51) Int Cl.:
*G01J 3/50* (2006.01)     *G01J 3/443* (2006.01)

(21) Application number: **12765434.1**

(22) Date of filing: **26.03.2012**

(86) International application number:
**PCT/JP2012/002067**

(87) International publication number:
**WO 2012/132380 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2011 JP 2011079393**

(71) Applicant: **Konica Minolta, Inc.**
**Tokyo 100-7015 (JP)**

(72) Inventor: **YAMAMOTO, Shinji**
**Sakai-shi**
**Osaka 590-8551 (JP)**

(74) Representative: **HOFFMANN EITLE**
**Patent- und Rechtsanwälte**
**Arabellastrasse 4**
**81925 München (DE)**

(54) **OPTICAL CHARACTERISTICS MEASURING APPARATUS AND METHOD**

(57)     An optical characteristic measuring apparatus and an optical characteristic measuring method of the invention are an optical characteristic measuring apparatus and method for obtaining a predetermined optical characteristic such as a color value or a total spectral radiation factor of a measurement object. A spectral intensity distribution of predetermined ambient light entering through a measurement opening is measured and stored prior to measurement of the optical characteristic. In measuring the optical characteristic, an optical characteristic in a condition that actually measured ambient light is used as an observation light source is obtained, with use of the stored spectral intensity distribution of ambient light.

FIG. 1A

FIG. 1B

1

103

102

101

**Description**

**TECHNICAL FIELD**

The present invention relates to an optical characteristic measuring apparatus and method capable of obtaining a spectral reflectance factor and a color value of an object, and more particularly to an optical characteristic measuring apparatus and method for estimating a value in a certain ambient light condition, as the color value.

**BACKGROUND ART**

Generally, it is necessary to designate an observation light source in order to define under which light source a color value is obtained in obtaining the color value of an object that does not emit light by itself. This is because the color of an object (measurement object) is determined by a spectral intensity distribution of a light source which irradiates light onto the object, and a spectral reflectance factor of the measurement object. In the case of a colorimeter, generally, a standard light source defined by the CIE (International Commission on Illumination) or by the ISO standards, such as D50, D65, C, A, and F can be set in the colorimeter, as the observation light source. When an operator sets a standard light source, a spectral intensity distribution of the standard light source is set in a computing section of the colorimeter. However, in the actual practice, it is often the case that in the case where the operator visually observes the measurement object, ambient illumination light may differ from the standard light source as defined above. In view of the above, there is proposed a colorimeter configured such that data on a light source having an intended spectral intensity distribution is registered, and a color value is obtained by using the light source as an observation light source in order to obtain a color value matching with visual observation.

For instance, patent literature 1 discloses the following. A spectral intensity distribution of predetermined ambient light as the observation light source is stored in advance as a spectral intensity distribution of a user light source, and a measurement result obtained with use of the predetermined standard light source as defined above is converted into a color value in the case where the user light source is used as the observation light source, based on a difference between the standard light source and the user light source.

On the other hand, patent literature 2 discloses a method for obtaining a spectral radiation factor and a color value by using, as testing illumination light, a light source having an intended spectral intensity distribution registered in advance in a testing illumination memory, without using the observation light source. By the above configuration, it is possible to accurately measure a spectral radiation factor of paper containing a fluorescent whitening agent.

However, in the conventional art disclosed in patent literature 1, there is no description about a method for acquiring a spectral intensity distribution of a light source to be set. Generally, there is used a method of inputting spectral intensity distribution data on a light source available from a fluorescent lamp manufacturer or the like, or a method of inputting spectral intensity distribution data measured with use of a spectral illuminometer. Accordingly, it is necessary to input a large amount of spectral intensity distribution data, even in the case where measurement is performed with a measurement pitch as large as 10 nm, for instance. Thus, the measuring operation is very cumbersome.

Further, even with use of the conventional art disclosed in patent literature 2, it is necessary to register a spectral intensity distribution of ambient light as testing illumination light in order to obtain a color value matching with visual observation, as well as in the conventional art disclosed in patent literature 1. A method for the registration is not specifically disclosed in patent literature 2.

**CITATION LIST**

**PATENT LITERATURE**

Patent literature 1: JP Sho 62-284225A
Patent literature 2: JP 2006-292510A

**SUMMARY OF INVENTION**

In view of the above, an object of the invention is to provide an optical characteristic measuring apparatus and an optical characteristic measuring method capable of obtaining a color value in an intended ambient light condition by a single apparatus with ease.

An optical characteristic measuring apparatus and an optical characteristic measuring method of the invention are an optical characteristic measuring apparatus and method for obtaining a predetermined optical characteristic such as a color value or a total spectral radiation factor of a measurement object. A spectral intensity distribution of predetermined ambient light entering through a measurement opening is measured and stored prior to measurement of the optical characteristic. In measuring the optical characteristic, an optical characteristic in a condition that actually measured ambient light is used as an observation light source is obtained, with use of the stored spectral intensity distribution of ambient light. The optical characteristic measuring apparatus and the optical characteristic measuring method of the invention are capable of obtaining a color value in various ambient light conditions by a single apparatus with ease.

These and other objects, features and advantages of the present invention will become more apparent upon reading the following detailed description along with the accompanying drawings.

## BRIEF DESCRIPTION OF DRAWINGS

FIGS. 1A and 1B are perspective views showing an entire configuration of a colorimeter according to a first embodiment;
FIG. 2 is an optical path diagram showing a schematic configuration of the colorimeter shown in FIG. 1 at an object color measurement mode;
FIG. 3 is a block diagram showing an electrical configuration of the colorimeter shown in FIG. 1;
FIG. 4 is an optical path diagram showing a schematic configuration of the colorimeter shown in FIG. 1 at an ambient light measurement mode;
FIG. 5 is flowcharts for describing an ambient light measuring operation and an object color measuring operation to be performed by the colorimeter shown in FIG. 1;
FIG. 6 is diagrams for describing operation procedures for obtaining a color value;
FIG. 7 is an optical path diagram showing a schematic configuration of a colorimeter at an object color measurement mode according to a second embodiment; and
FIG. 8 is flowcharts for describing an ambient light measuring operation and an object color measuring operation to be performed by the colorimeter shown in FIG. 7.

## DESCRIPTION OF EMBODIMENTS

Hereinafter, embodiments of the invention are described referring to the drawings. Constructions identified by the same reference numerals in the drawings are the same constructions and not repeatedly described unless necessary. Further, in the specification, in the case where the elements are generically referred to, the elements are indicated with reference numerals without suffixes, and in the case where the elements are individually referred to, the elements are indicated with reference numerals with suffixes.

(First Embodiment)

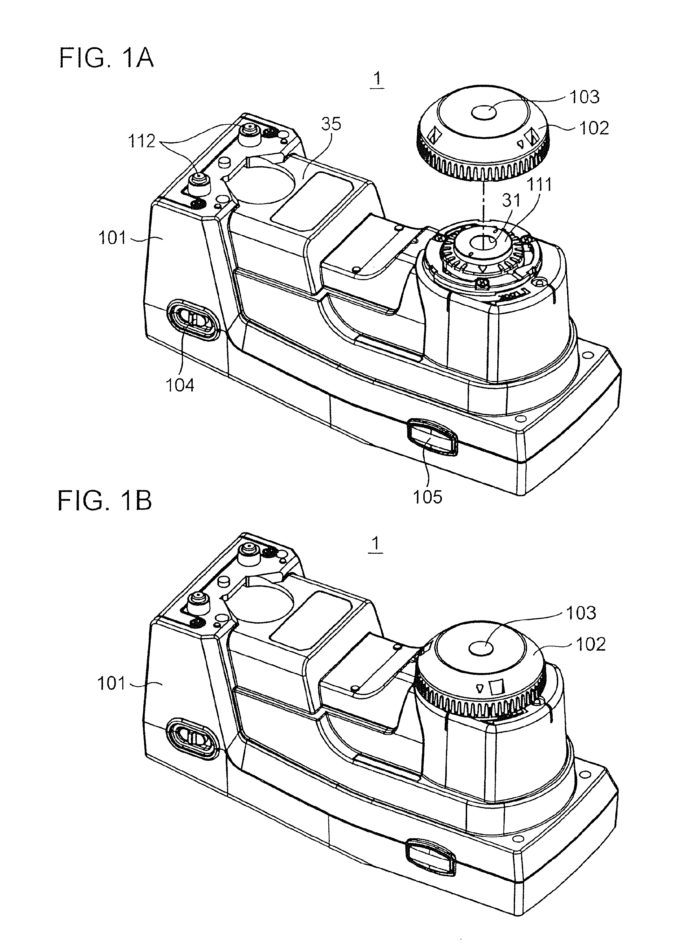

FIGS. 1A and 1B are perspective views showing an entire configuration of a colorimeter according to the first embodiment. FIGS. 1A and 1B show a state that a measurement opening 31 of an apparatus body 101 faces upwardly. The colorimeter 1 is a handy type colorimeter, and is an example of an optical characteristic measuring apparatus. In measuring a measurement object with use of the colorimeter 1, an operator holds the apparatus body 101 in such a manner that the measurement opening 31 of the colorimeter 1 faces (comes into contact with) a surface of the measurement object, and then, a measuring operation of the measurement object is executed. As will be described later, an attachment 102 is mounted at a position near the measurement opening 31 of the apparatus body 101 by screw-in or a like operation, as necessary. FIG. 1A shows a state before the attachment 102 is mounted, and FIG. 1B shows a state after the attachment 102 is mounted.

The attachment 102 is used to hold a diffuser plate 103 to be described later in measuring ambient light. In measuring the measurement object (in a measuring state), the apparatus body 101 is placed onto a printed matter, as an example of the measurement object, which is placed on a table, in a state that the attachment 102 is not mounted and in a state the measurement opening 31 faces downwardly. When a power source switch 104 is turned on, and a measurement button 105 is operated, the apparatus body 101 is operated to measure a color value of the printed matter. A measurement result may be displayed on a display section (not shown) formed on the back side of the apparatus body 101 in FIGS. 1A and 1B, or may be transmitted to a personal computer connected to the apparatus body 101. In the above configuration, a contact portion 111 at a periphery of the measurement opening 31 and a pair of leg portions 112 come into contact with the printed matter, whereby the apparatus body 101 is supported. The contact portion 111 is firmly contacted with the printed matter in such a manner as to prevent incidence of external light through the measurement opening 31. The colorimeter 1 is configured such that a white calibration plate is detachably attachable substantially in the same manner as the attachment 102. It is possible to calibrate a spectral intensity characteristic of a polychromator unit 35 to be described later by detachably attaching the white calibration plate.

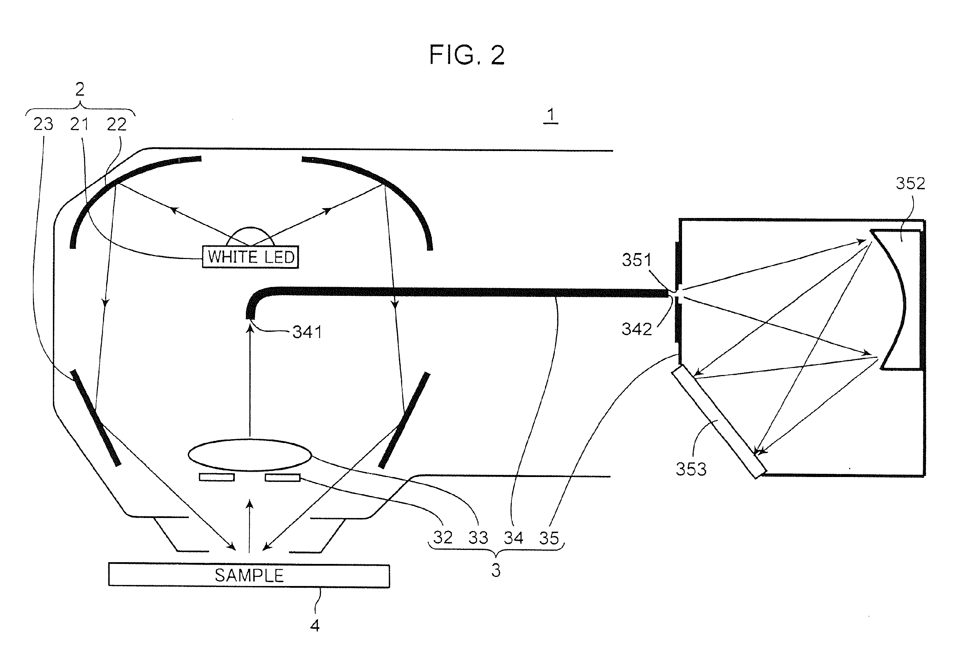

FIG. 2 is an optical path diagram showing a schematic configuration of the colorimeter 1 shown in FIGS. 1A and 1B at an object color measurement mode. Referring to FIG. 2, the optical path of the colorimeter 1 is generally constituted of an illumination optical system 2 and a light receiving optical system 3. The illumination optical system 2 and the light receiving optical system 3 are housed in the apparatus body 101.

The light receiving optical system 3 is provided with a thin annular circular mask 32 configured to form the measurement opening 31, a lens 33 configured to collect light passing through the circular mask (light receiving mask plate) 32, an optical fiber 34 having an incident end 341 at a position corresponding to a focal point of the lens 33, and the polychromator unit 35 configured to guide emission light through an exit end 342 of the optical fiber 34 into an incident opening 351 of the polychromator unit 35. The optical fiber 34 has a predetermined length so that light beams entering in different directions through the measurement opening 31 are mixed with each other within the optical fiber 34 for eliminating a variation of light collected on the lens 33 depending on the incident position of the light with respect to the optical fiber 34.

The illumination optical system 2 is provided with an illumination light source 21, a reflector plate 22, and a toroidal mirror 23. The illumination light source 21 is provided with a white LED which emits light in a visible wavelength range, and is disposed on the side opposite to the lens 33 with respect to the incident end 341 of the optical fiber 34. The reflector plate 22 is a reflecting member, and has a hemispherical shape or a dome-like shape formed by partially cutting away a hemisphere. The illumination light source 21 is disposed at a center region (focal point) of the reflector plate 22. Illumination light from the illumination light source 21 is reflected on the inner surface of the reflector plate 22 in a direction toward the measurement opening 31, and then is reflected on the cylindrical toroidal mirror 23. Light reflected on the toroidal mirror 23 is irradiated onto a sample 4 as a measurement object in a direction from the outside of the circular mask 32 annularly and from all around the toroidal mirror 23. The incident angle of light with respect to the sample 4 is 45° with respect to normal to the sample surface. Accordingly, the toroidal mirror 23 has a cylindrical shape, with a section in the axis direction thereof in the shape of a truncated cone.

In this way, the illumination optical system 2 and the light receiving optical system 3 have 45°a: 0° geometry. It is possible to reduce an influence by inclination of a sample surface or anisotropy by illuminating the sample 4 from all around.

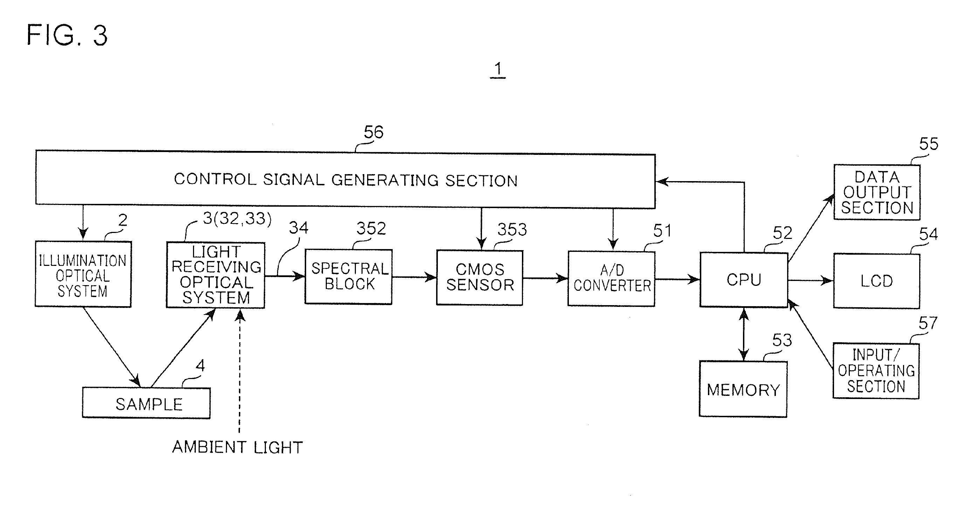

FIG. 3 is a block diagram showing an electrical configuration of the colorimeter shown in FIGS. 1A and 1B. Reflected light from the sample 4 irradiated with illumination light from the illumination optical system 2, and ambient light as external incident light are received by the light receiving optical system 3. Specifically, reflected light from the sample 4 and ambient light as external incident light are incident onto the lens 33 through the circular mask 32, collected on the lens 33, and is entered to the optical fiber 34 through the incident end 341. Then, the light is guided through the optical fiber 34, and is entered to the polychromator unit 35 through the incident opening 351. The polychromator unit 35 is provided with a spectral plate (spectral block) 352 such as a diffraction grating, and a CMOS line sensor 353 in a dark box such as a camera obscure. Incident light onto the polychromator unit 35 (reflected light from the sample 4, and ambient light as external incident light) is divided into light beams of wavelengths in the range of from about 360 nm to 730 nm by the spectral plate 352 such as a diffraction grating. The light beams of the respective wavelengths are photoelectrically converted by respective light receiving elements of the CMOS line sensor 353. Photoelectrically converted signals of the respective wavelengths are converted into digital data by an A/D converter 51, and the digital data is input to a CPU 52.

The CPU 52 is an example of a computing section. The CPU 52 obtains a spectral reflectance factor of the measured sample 4, with use of acquired digital data, and calibration data written in a memory 53 in advance in a factory, for instance. The CPU 52 obtains a color value based on the spectral reflectance factor, and may display a measurement result on an LCD 54 or may output a measurement result to a personal computer as an external device via a data output section 55. Further, the CPU 52 performs an ambient light measuring operation, and performs various settings in response to the operator's operating an input/operating section 57 including the measurement button 105. The CPU 52 also performs ON/OFF control of the illumination light source 21, control of a CMOS sensor 353, and timing control of the A/D converter 51 via a control signal generating section 56.

The thus configured colorimeter 1 of this embodiment is provided with two measurement modes i.e. an object color measurement mode at which a spectral reflectance factor of the sample 4 is obtained, and an ambient light measurement mode to be executed prior to the object color measurement mode for measuring a spectral intensity distribution of intended ambient light as illumination light in order to obtain a color value of the sample 4 as a measurement object. The colorimeter 1 obtains a spectral reflectance factor and a color value of the sample 4, in the case where actually measured ambient light is used as an observation light source.

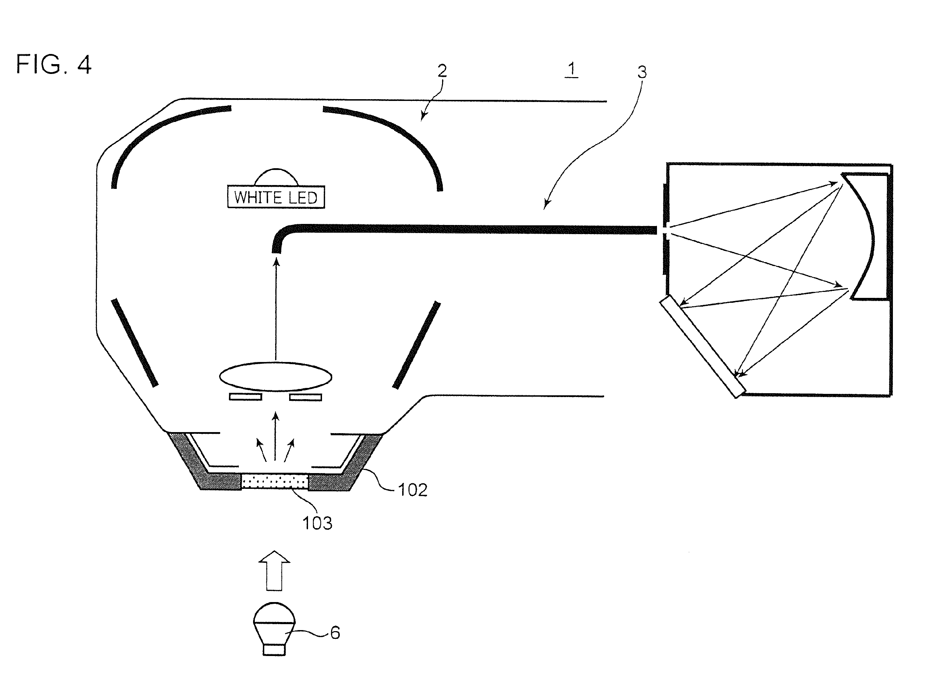

FIG. 4 is an optical path diagram showing a schematic configuration of the colorimeter 1 shown in FIGS. 1A and 1B at the ambient light measurement mode. FIG. 2 is an optical path diagram at the object color measurement mode. At the ambient light measurement mode, there is used the configuration of the light receiving optical system 3 in a state that the illumination optical system 2 is removed from the configuration shown in FIG. 2. Further, as shown in FIG. 1A, at the object color measurement mode, there is used the apparatus body 101 in a state that the attachment 102 is detached from the colorimeter 1. As shown in FIG. 1B, at the ambient light measurement mode, the attachment 102 is attached to the apparatus body 101, specifically, as shown in FIG. 4, measurement is performed in a state that the diffuser plate 103 is placed on the measurement opening 31.

As described above, measuring a spectral intensity distribution of ambient light by disposing the diffuser plate 103 on the measurement opening 31 makes it possible to reduce an influence of positional relationship between a light source 6 of the ambient light as an observation light source, and the light receiving optical system 3. In other words, it is possible to reduce a variation of the ambient light depending on an incident position of the light. Accordingly, use of the diffuser plate 103 makes it possible to stably guide ambient light to the inside of the apparatus body 101 (light receiving optical system 3). This is advantageous in the enhancing measurement precision in measuring a light source. Holding the diffuser plate 103 having the aforementioned function on the attachment 102, and detachably attaching the attachment 102 to the measurement opening 31 makes it possible for the operator to easily switch the colorimeter 1 of the embodiment between the ambient light measurement mode and the object color measurement mode.

As far as the attachment 102 is capable of holding the diffuser plate 103 and is detachably attachable to the measurement opening 31, any configuration is applicable. For instance, the attachment 102 may be a screw-in type supporter ring or a supporter ring provided with an engagement claw. Further, in the case where an engagement claw of the diffuser plate 103 is provided on the apparatus body 101 side to freely project and retract, the diffuser plate 103 itself may cover the measurement opening 31, without being held on the attachment 102.

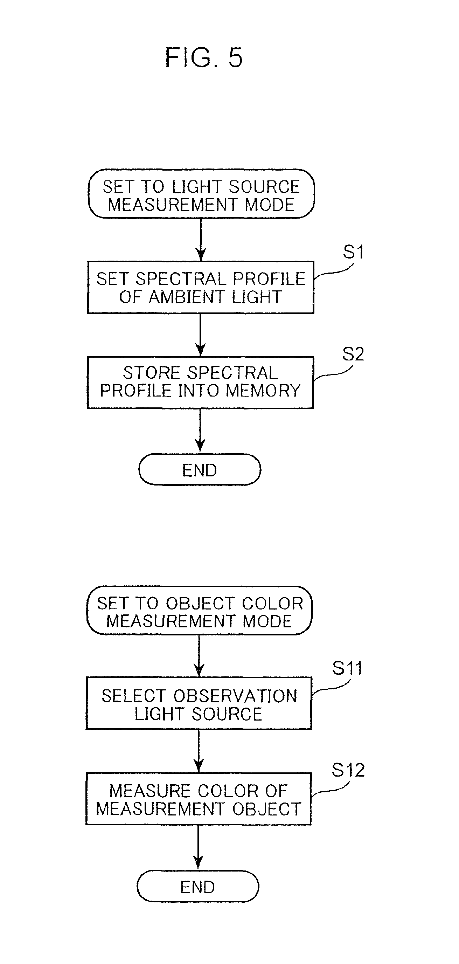

FIG. 5 is flowcharts for describing an ambient light measuring operation and an object color measuring operation to be performed by the colorimeter shown in FIGS. 1A and 1B. Referring to FIG. 5, when the ambient light measurement mode is executed in response to the operator's operating the input/operating section 57, mounting the attachment 102, and the like, in Step S1, the CPU 52 measures a spectral intensity distribution (spectral profile) of ambient light from the light source 6. Specifically, as shown in FIG. 4, ambient light from the light source 6 is incident onto the collecting lens 33 through the diffuser plate 103 mounted on the outer periphery of the measurement opening 31 (circular mask 32), collected on the collecting lens 33, entered into the optical fiber 34, and then is guided to the polychromator unit 35 through the optical fiber 34. In this configuration, the illumination optical system 2 is in an inoperative state. In other words, the illumination light source 21 is kept in an off-state. Then, the incident light (ambient light) in the polychromator unit 35 is divided into light beams of respective wavelengths by the spectral plate 352. The light beams of the respective wavelengths are photoelectrically converted into electrical signals according to the intensity of received light by the respective light receiving elements of the CMOS line sensor 353, whereby the electrical signals are obtained. The electrical signals of the respective wavelengths are converted into digital data by the A/D converter 51, and the digital data is input to the CPU 52.

Then, in Step S2, the CPU 52 performs compensation (subtraction) with respect to acquired digital data, with use of calibration data (such as spectral sensitivity data) of the spectral plate 352 or the CMOS line sensor 353 written in advance in the memory 53, and with use of calibration data (spectral transmittance data) of the diffuser plate 103 for obtaining spectral intensity distribution data (spectral profile data) of the ambient light. The data is stored in the memory 53, and the processing is ended.

On the other hand, referring to FIG. 5, in Step S11, when the object color measurement mode is executed in response to the operator's operating the input/operating section 57, detaching the attachment 102, and the like, the operator is allowed to select and input a type of observation light source through the input/operating section 57. After the selection and input, in Step S12, the object color of the sample 4 as a measurement object is measured. Specifically, the CPU 52 causes the illumination optical system 2 to activate, in other words, to turn on the illumination light source 21. By turning on the illumination light source 21, illumination light generated in the illumination light source 21 is reflected on the reflector plate 22 and on the toroidal mirror 23, and is irradiated onto the sample 4 at an angle of 45° with respect to the normal direction. A normal component among the light beams reflected on the sample 4 is guided to the polychromator unit 35 through the measurement opening 31 (circular mask 32), the collecting lens 33, and the optical fiber 34 in the same manner as described above. Then, the light beams are converted into signals according to the spectral intensity of the respective wavelengths in the CMOS line sensor 353. The signals are converted into digital data by the A/D converter 51, and the digital data is input to the CPU 52. The CPU 52 obtains a spectral reflectance factor of the measured sample 4, with use of the thus acquired digital data and the calibration data written in advance in the memory 53. Further, the CPU 52 obtains a color value based on the spectral reflectance factor, and may display a measurement result on the LCD 54 or may output the measurement result to an external device via the data output section 55. In computing the color value, the CPU 52 computes a color value in a condition of ambient light of the light source selected by the operator, from among the spectral intensity distributions of the respective light sources stored in the memory 53.

In the following, there is described an example of the method for computing a color value by the CPU 52. Firstly, for instance, spectral sensitivity data $L0(\lambda)$ of the colorimeter 1 (light receiving optical system 3) in the case where reference light is measured is obtained as calibration data in the factory. The spectral sensitivity data $L0(\lambda)$ is recorded

in the memory 53 as apparatus body sensitivity data $L0(\lambda)$. Measurement of the apparatus body sensitivity data $L0(\lambda)$ is performed by mounting a master reference diffuser plate as the diffuser plate 103, and by measuring reference light whose spectral illuminance (spectral intensity distribution) $S0(\lambda)$ is known. The apparatus body sensitivity data $L0(\lambda)$ is an A/D converted value obtained by the measurement.

Then, at the ambient light measurement mode, assuming that an actually measured A/D converted value is $L1(\lambda)$, a spectral illuminance (spectral intensity distribution) $S1(\lambda)$ of measured ambient light is obtained by the following formula (1).

$$S1(\lambda)=S0(\lambda)*L1(\lambda)/L0(\lambda)*N(\lambda) \qquad\qquad \dots (1)$$

where $N(\lambda)$ is transmittance data of the diffuser plate 103, and is a transmittance ratio between the master diffuser plate having a relatively high precision and used in the factory, and a diffuser plate having a relatively low precision and attached to a product for actual use at the ambient light measurement mode. Specifically, the diffuser plate transmittance data $N(\lambda)$ is data for use in compensating lot-to-lot variations of diffuser plates 103 to be actually used.

In the case where the diffuser plate 103 is not configured to be exchangeable together with the attachment 102 as described above, for instance, in the case where the diffuser plate 103 is mounted on a slide member provided in the apparatus body 101 to freely project and retract with respect to the measurement opening 31, each of the products does not have to individually store diffuser plate transmittance data $N(\lambda)$. It is possible to compensate the spectral transmittance characteristic of the diffuser plate 103, with use of the apparatus body sensitivity data $L(\lambda)$ obtained by measuring the reference light through the directly-attached diffuser plate 103.

Further, in the factory, a predetermined white calibration plate whose spectral reflectance factor $R0(\lambda)$ is known is mounted on the measurement opening 31, and the white calibration plate is measured with use of the illumination optical system 2 and the light receiving optical system 3. An A/D converted value $D0(\lambda)$ of the white calibration plate, and the spectral reflectance factor $R0(\lambda)$ are recorded in the memory 53. Measurement and recording of calibration data of the white calibration plate may be performed by the operator at the time of measurement. A spectral reflectance factor $R1(\lambda)$ of the measured sample 4 is obtained by the following formula (2) with use of an A/D converted value $D1(\lambda)$ obtained by actual measurement of the sample 4. In actual measurement of the sample 4, a variation of the light amount of the illumination light source 21 and an ambient temperature variation are corrected.

$$R1(\lambda)=R0(\lambda)*D1(\lambda)/D0(\lambda) \qquad\qquad \dots (2)$$

Next, the CPU 52 obtains a color value (a tristimulus value $(X, Y, Z)$) by the following formula (3).

$$\text{color value (tristimulus value } (X, Y, Z))$$
$$= \text{spectral distribution of light (observation light source) for use in color display*spectral reflectance factor of measurement object*color-matching function (spectral sensitivity of eye)} \qquad \dots (3)$$

The definitional formula on an object color is expressed by the following formula (4) (formula (4-1) to formula (4-4)).

$$X = K\int_{380}^{780}S(\lambda)\overline{x}(\lambda)R(\lambda)d\lambda \qquad\qquad \dots (4\text{-}1)$$

$$Y = K\int_{380}^{780}S(\lambda)\overline{y}(\lambda)R(\lambda)d\lambda \qquad\qquad \dots (4\text{-}2)$$

$$Z = K \int_{380}^{780} S(\lambda) \bar{z}(\lambda) R(\lambda) d\lambda \qquad \dots (4\text{-}3)$$

$$K = \frac{100}{\int_{380}^{780} S(\lambda) \bar{y}(\lambda) d\lambda} \qquad \dots (4\text{-}4)$$

S($\lambda$) denotes a spectral distribution (=S1($\lambda$)) of light for use in color display, x($\lambda$), y($\lambda$), and z($\lambda$) respectively denote color-matching functions in an XYZ color system, and R($\lambda$) denotes a spectral reflectance factor (=R1($\lambda$)).

It is possible to obtain a color value of an intended color system, as necessary, with use of a tristimulus value (X, Y, Z). For instance, respective values of L*a*b color system can be obtained by the following formula (5) (formula (5-1) to formula (5-4)).

lightness index: L*

$$L^* = 116 \left( \frac{Y}{Yn} \right)^{1/3} - 16 \qquad \dots (5\text{-}1)$$

chromaticness index: a*b*

$$a^* = 500 \left[ \left( \frac{X}{Xn} \right)^{1/3} - \left( \frac{Y}{Yn} \right)^{1/3} \right] \qquad \dots (5\text{-}2)$$

$$b^* = 200 \left[ \left( \frac{Y}{Yn} \right)^{1/3} - \left( \frac{Z}{Zn} \right)^{1/3} \right] \qquad \dots (5\text{-}3)$$

where

$$\frac{Y}{Yn} > \left( \frac{24}{116} \right)^{3*} \quad , \quad \frac{X}{Xn} > \left( \frac{24}{116} \right)^{3*} \quad , \quad \frac{Z}{Zn} > \left( \frac{24}{116} \right)^{3*} \qquad \dots (5\text{-}4)$$

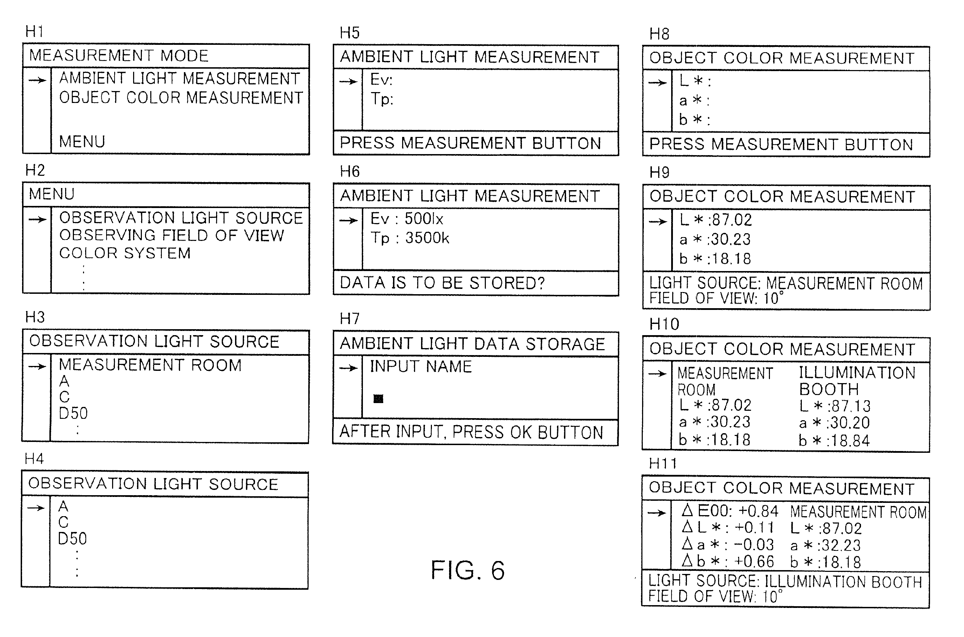

Next, operation procedures for obtaining a color value of a measurement object by designating a measured spectral intensity distribution as an observation light source is described briefly. FIG. 6 is diagrams for describing the operation procedures for obtaining a color value.

As shown in FIG. 6, firstly, in a screen H1 to be displayed on the LCD 54 after the apparatus is activated, the operator selects, through the input/operating section 57, one of the measurement modes ("AMBIENT LIGHT MEASUREMENT" and "OBJECT COLOR MEASUREMENT"), or "MENU". When "AMBIENT LIGHT MEASUREMENT" is selected, an ambient light measurement screen H5 is displayed, and the colorimeter 1 is brought to the ambient light measurement mode as described in FIG. 5. In response to the operator's depressing the measurement button 105, measurement is completed by the aforementioned process. After the measurement, as shown in a screen H6, a message for prompting the operator to decide whether the data is to be stored is displayed together with a measurement result. In response to the operator's depressing an unillustrated OK button or an unillustrated cancel button, the operator is allowed to decide whether the data is to be stored or not. In the case where the OK button is selected, a data storage screen H7 is displayed. After the name of the light source, for instance, "MEASUREMENT ROOM" is input, in response to the operator's depressing the OK button, the name of the light source is stored into the memory 53 in association with the spectral intensity distribution data.

Next, an observation light source setting screen H3 is displayed, and the operator is allowed to designate an observation light source through the input/operating section 57. In this example, the name of the light source having the stored spectral intensity distribution i.e. "MEASUREMENT ROOM" is displayed at the uppermost position (top position). In response to the operator's depressing the OK button in this state, the spectral intensity distribution data of the measured ambient light is read out from the memory 53 and transmitted to the CPU 52, and the light source having the spectral intensity distribution is designated as the observation light source. Then, an object color measurement screen H8 is displayed. In response to the operator's depressing the measurement button 105 while the screen H8 is displayed, a color value is measured. Then, a measurement result is displayed as shown in a screen H9. In the screen H9, the name of the designated ambient light data, namely, "MEASUREMENT ROOM" is displayed, and a measurement condition such as "FIELD OF VIEW" is also displayed.

On the other hand, while a menu setting screen H2 is displayed, the operator is allowed to set conditions regarding an observation light source, an observing field of view, and a color-matching system for object color measurement, and for ambient light measurement. In the case where an observation light source is designated on the menu setting screen H2, and if ambient light data read out by the operator is stored as described above, the name of the light source corresponding to the ambient light data i.e. "MEASUREMENT ROOM" is displayed as one of the observation light sources, as shown in the screen H3. However, in the case where there is  no ambient light data is stored, only the names of the light sources which are stored in advance at the time of shipment of products, such as D50, D65, A, and F are displayed, as shown in a screen H4.

As described above, in storing spectral intensity distribution data (spectral profile data) of the observation light source 6 measured at the ambient light measurement mode into the memory 53, the input/operating section 57 serving as a setting section is provided so that the operator is allowed to input the name of the observation light source 6 as identification information of the observation light source 6 through the input/operating section 57, and the CPU 52 stores the input name in association with the spectral intensity distribution data. In the thus configured colorimeter 1 of the embodiment, the operator can easily designate the observation light source 6 at the object color measurement mode.

Preferably, the colorimeter 1 may be configured in such a manner that the operator is allowed to select one of the observation light sources 6 prior to executing the object color measurement mode. The thus configured colorimeter 1 is operative to display the color values under the different observation light sources 6 side by side on the LCD 54, as shown in a screen H10. By the above configuration, the operator can easily check the degree of color difference between the light sources on the display screen of the LCD 54. In the example shown in FIG. 6, a color value obtained in the case where "MEASUREMENT ROOM" is used as one of the observation light sources 6, and a color value obtained in the case where "ILLUMINATION BOOTH" is used as another observation light source 6 are shown in the screen H10. The illumination booth is an illumination box configured to visually observe the color of a measurement object. The illumination box is configured such that a fluorescent lamp is disposed on the top of the box. The operator puts a measurement object in the box, and visually observes the color of the measurement object from the front side of the box. The illumination box is also called as a color viewing booth.

As described above, the colorimeter 1 is configured such that measurement results on spectral intensity distributions of a plurality of ambient light (observation light sources 6) are storable in the memory 53, and the operator is allowed to select and designate one of the observation light sources 6 as necessary for reading out a measurement result from the memory 53 for use. By the above configuration, it is not necessary to measure a spectral intensity distribution of ambient light, each time the ambient light changes. This enhances the operability of the colorimeter 1. Further, as described above, adding the identification information of ambient light (observation light source 6) such as the name of a measurement site makes it easy for the operator to designate one of the plurality of ambient light (observation light  sources 6). This is particularly advantageous in the aspect of operability.

Further, in the case where two or more observation light sources 6 are selectable, as shown in a screen H11, a color difference in two or more observation light sources 6 may be displayed. In the screen H11, a color difference of the color value in "ILLUMINATION BOOTH" with respect to the color value in "MEASUREMENT ROOM" is displayed.

As described above, the colorimeter 1 of the embodiment is provided with two measurement modes i.e. the object color measurement mode at which a spectral reflectance factor of the measurement object (sample 4) is obtained, and the ambient light measurement mode at which a spectral intensity distribution of intended ambient light is measured as illumination light prior to measurement at the object color measurement mode for obtaining a color value of the measurement object (sample 4). By the above configuration, it is possible to obtain a spectral reflectance factor and a color value of the measurement object in the case where actually measured ambient light is used as the observation light source 6.

Specifically, at the ambient light measurement mode, the CPU 52 activates the light receiving optical system 3 as an example of a light source measuring section via the control signal generating section 56, to allow ambient light from an intended ambient light source 6 to enter through the measurement opening 31, to measure a spectral intensity distribution of the ambient light, and to store a measurement result on the ambient light into the memory 53. Then, at the object color measurement mode, the CPU 52 activates the illumination optical system 2 as an example of an illumination light source, and the light receiving optical system 3 as an example of a spectral measuring section, via the control signal generating section 56, causes the illumination optical system 2 to irradiate the measurement object (sample 4) placed on the measurement opening 31 with illumination light whose spectral intensity distribution is measured in advance and stored in the memory 53. Then, the CPU 52 causes the light receiving optical system 3 to measure a spectral reflectance factor of the measurement object (sample 4), based on the light reflected on the measurement object (sample 4) irradiated with the illumination light. Then, the CPU 52 obtains a color value of the measurement object (sample 4) in the case where ambient light having a spectral intensity distribution stored in the memory 53 is used as the observation light source 6, based on the measured spectral reflectance factor.

As described above, the colorimeter 1 of the embodiment is capable of measuring a spectral intensity distribution of intended ambient light, and capable of measuring a spectral reflectance factor and a color value of a measurement object (sample 4) irradiated with light from a predetermined light source; and is capable of obtaining a color value of the measurement object (sample 4) in the case where the measured ambient light is used as the observation light source 6, by a single apparatus. By the above configuration, it is possible to implement the colorimeter 1, as an optical characteristic measuring apparatus capable of obtaining a color value matching with visual observation with ease.

In the case where the spectral intensity distribution of the illumination light source 21 is displaced from a spectral intensity distribution measured in advance due to a change in positional relationship between the spectral plate 352 and the CMOS line sensor 353, a change in photoelectric conversion characteristic of the CMOS line sensor 353, or an emission characteristic variation of the illumination light source, a calibration operation such as placing the white calibration plate on the measurement opening 31, measuring an actual spectral intensity distribution of the illumination light source 21 by the polychromator unit 35, and updating the storage contents in the memory 53 may be performed as necessary.

Next, another embodiment is described.


(Second Embodiment)


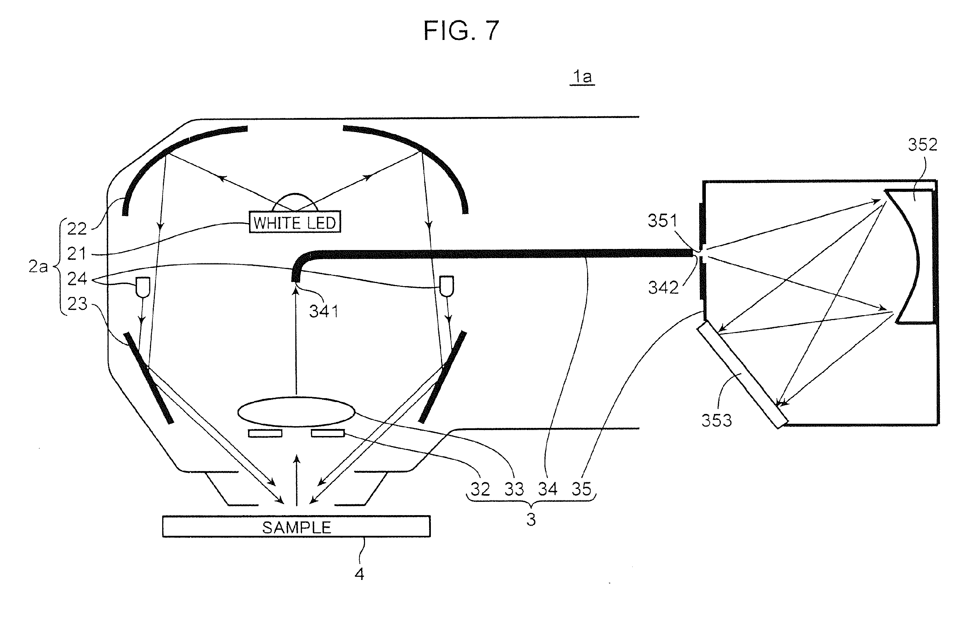

FIG. 7 is an optical path diagram showing a schematic configuration of a colorimeter at an object color measurement mode according to the second embodiment. As shown in FIG. 7, a colorimeter 1a of the second embodiment is similar to the colorimeter 1 of the first embodiment. Elements in the second embodiment corresponding to those in the first embodiment are indicated with the same reference numerals as those in the first embodiment, and description thereof is omitted herein. The colorimeter 1 of the first embodiment is configured such that a spectral intensity distribution of measured ambient light is set in the observation light source 6 for object color measurement. On the other hand, the colorimeter 1a of the second embodiment is configured such that a spectral intensity distribution of measured ambient light is set in testing illumination light for object color measurement.

In the colorimeter 1a of the second embodiment, an illumination optical system 2a is used, in place of the illumination optical system 2 in the colorimeter 1 of the first embodiment. The illumination optical system 2a is provided with an illumination light source 21, a reflector plate 22, and a toroidal mirror 23, as well as the illumination optical system 2. The illumination optical system 2a is further provided with second light sources 24. Specifically, in the illumination optical system 2a of the colorimeter 1a of the second embodiment, the illumination light source 21 serving as a first light source is provided with a white LED that generates visible light excluding light of a wavelength capable of exciting a fluorescent substance, and the second light sources 24 are provided with ultraviolet LEDs that generate light including at least light in an ultraviolet wavelength range capable of exciting a fluorescent substance, in the case where a measurement object (sample 4) is a fluorescent sample.

In the example shown in FIG. 7, the second light sources 24 are respectively disposed at left and right sides on the plane of FIG. 7. As far as it is possible to illuminate a sample 4 in the direction of an angle of about 45° with respect to normal to the sample 4 in the same manner as the illumination light source 21 as a first light source, any configuration may be applied to the second light sources 24. For instance, the second light sources 24 may irradiate the sample 4 by using the reflector plate 22 in the same manner as the illumination light source 21. Alternatively, the second light sources 24 may directly irradiate the sample 4 without reflecting light from the second light sources 24 on the toroidal mirror 23, unlike the illumination light source 21. Further, in this embodiment, a polychromator unit 35 of the light receiving optical system 3 is configured to acquire spectral intensity distribution data in an ultraviolet wavelength range at least including an excitation wavelength range of a fluorescent whitening agent in order to accurately measure the fluorescent component.

In this example, a fluorescent component is added to reflected light in measuring a sample containing a fluorescent whitening agent such as paper. The spectral characteristic of a fluorescent component depends on the spectral intensity distribution of light that illuminates a sample. Accordingly, it is necessary to match the spectral intensity distribution of illumination light with that of testing illumination light for accurately measuring an optical characteristic of a sample containing a fluorescent whitening agent. Generally, a standard light source such as D50, D65, or A as described above is used as testing illumination light. However, it is very difficult to match the spectral intensity distribution of actually illuminating light with the spectral intensity distribution of D50, for instance. In patent literature 2, reflected light from a sample is measured with use of illumination light having a certain spectral intensity distribution, and with use of illumination light having another spectral intensity distribution; and a total spectral radiation factor in the case where the sample is illuminated with illumination light having an intended spectral intensity distribution is obtained, based on the aforementioned respective measurement data, and a factor stored in the memory in advance. In view of the above, similar to the configuration of patent literature 2, the first light source 21 and the second light sources 24 having spectral intensity distributions different from each other are used in the second embodiment. However, patent literature 2 is silent about using a spectral intensity distribution of measured ambient light as testing illumination light.

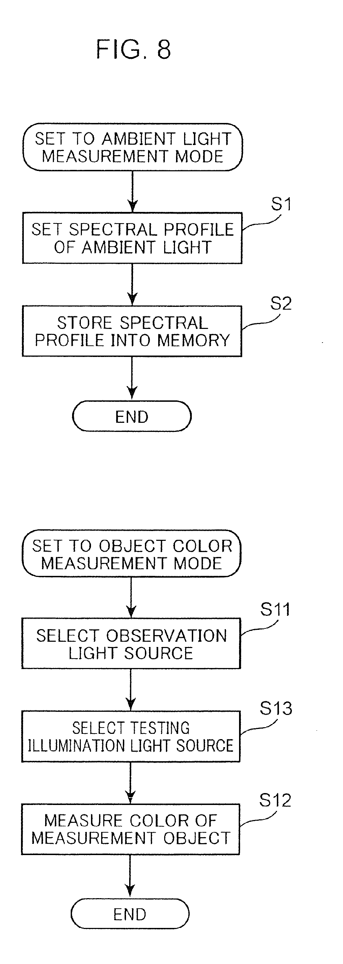

FIG. 8 is flowcharts for describing an ambient light measuring operation and an object color measuring operation to be performed by the colorimeter shown in FIG. 7. Referring to FIG. 8, steps substantially equivalent or corresponding to the steps shown in FIG. 5 are indicated with the same step numbers as those in FIG. 5, and description thereof is omitted herein. In FIG. 8, operations to be performed at the ambient light measurement mode are the same as those shown in FIG. 5.

On the other hand, at the object color measurement mode, firstly, in Step S11, the operator selects one of observation light sources 6 through an input/operating section 57 under the control of a CPU 52. Thereafter, in Step S 13, testing illumination light is set in the similar manner as described above. It is possible to set both of the observation light source and the testing illumination light individually. However, in order to easily obtain a color value in the same condition as in a condition that the sample is visually observed at a site where ambient light is measured, measured spectral intensity distributions of both of the observation light source 6 and the testing illumination light may be set. Thereafter, in Step S12, the object color of the measurement object i.e. the sample 4 is measured. In this embodiment, a total spectral radiation factor is obtained, based on the testing illumination light set in Step S 13. Further, a total spectral radiation factor and a color value including fluorescent reflection are obtained under the testing illumination light by obtaining a color value based on the observation light source 6 set in Step S13.

The specification discloses the aforementioned features. The following is a summary of the primary features of the embodiments.

An optical characteristic measuring apparatus according to an aspect is an optical characteristic measuring apparatus for obtaining a color value of a measurement object. The optical characteristic measuring apparatus is provided with a light source measuring section which measures a spectral intensity distribution of predetermined ambient light entering through a measurement opening; a storing section which stores a measurement result by the light source measuring section; an illumination light source which irradiates the measurement object facing the measurement opening with illumination light whose spectral intensity distribution is measured in advance; a spectral measuring section which measures a spectral reflectance factor of the measurement object, based on reflected light from the measurement object irradiated with the illumination light; and a computing section which obtains a color value of the measurement object in a condition of ambient light having a spectral intensity distribution stored in the storing section, based on the measured spectral reflectance factor.

An optical characteristic measuring method according to another aspect is an optical characteristic measuring method including a step of measuring and storing a spectral intensity distribution of predetermined ambient light; a step of measuring a spectral reflectance factor of the measurement object, with use of illumination light from an illumination light source, the illumination light having a spectral intensity distribution measured in advance; and a step of obtaining a color value of the measurement object in a condition of ambient light having the stored spectral intensity distribution, based on the measured spectral reflectance factor.

In the thus configured optical characteristic measuring apparatus and method, prior to measurement of the measurement object, the spectral intensity distribution of ambient light is measured and stored. In actual measurement of the measurement object, a color value of the measurement object is obtained, with use of the spectral intensity distribution of the measured ambient light. Accordingly, the thus configured optical characteristic measuring apparatus and method are capable of measuring a spectral intensity distribution of intended ambient light, and capable of measuring a spectral reflectance factor and a color value of the measurement object irradiated with light from a predetermined light source, by a single apparatus; and is capable of obtaining a color value of the measurement object in the case where the measured ambient light is used as an observation light source. Thus, it is possible to implement a colorimeter capable of obtaining a color value matching with visual observation with ease.

Further, an optical characteristic measuring apparatus according to yet another aspect is an optical characteristic measuring apparatus for obtaining a total spectral radiation factor of a measurement object. The optical characteristic measuring apparatus is provided with a light source measuring section which measures a spectral intensity distribution of predetermined ambient light entering through a measurement opening; a storing section which stores a measurement result by the light source measuring section; an illumination light source which irradiates the measurement object facing the measurement opening with illumination light whose spectral intensity distribution is measured in advance, the illumination light source including a first light source configured to generate visible light, and a second light source configured to generate light including at least light in an ultraviolet wavelength range and capable of exciting an fluorescent substance, in a case that the measurement object is a fluorescent sample; a spectral measuring section which measures a total spectral radiation factor of the measurement object, based on reflected light from the measurement object in a case that the first light source and the second light source are used; and a computing section which obtains a total spectral radiation factor of the measurement object in a condition of ambient light, based on the total spectral radiation factor of the measurement object measured by irradiation of the illumination light having two different spectral intensity distributions, and based on a spectral intensity distribution of ambient light stored in the storing section.

Further, an optical characteristic measuring method according to yet another aspect is an optical characteristic measuring method for obtaining a total spectral radiation factor of a measurement object. The optical characteristic measuring method includes a step of measuring and storing a spectral intensity distribution of predetermined ambient light; a step of measuring a total spectral radiation factor of the measurement object, with use of illumination light from a first light source configured to generate visible light, a spectral intensity distribution of the illumination light being measured in advance, and with use of illumination light from a second light source configured to generate light including at least light in an ultraviolet wavelength range and capable of exciting a fluorescent substance, in a case that the measurement object is a fluorescent sample; and a step of obtaining a total spectral radiation factor of the measurement object in a condition of ambient light, based on the total spectral radiation factor of the measurement object measured by irradiation of the illumination light having two different spectral intensity distributions, and based on the stored spectral intensity distribution of ambient light.

In the previously-described optical characteristic measuring apparatus and method, the spectral intensity distribution of measured ambient light is set in the observation light source for object color measurement. In the aforementioned optical characteristic measuring apparatus and method, the spectral intensity distribution of measured ambient light is set in testing illumination light for object color measurement. Accordingly, in the aforementioned optical characteristic measuring apparatus and method, a sample is irradiated with illumination light from the first light source having a certain spectral intensity distribution and is irradiated with illumination light from the second light source having another spectral intensity distribution. Reflected light from the sample irradiated with the illumination light from the first light source and reflected light from the sample irradiated with the illumination light from the second light source are measured and stored. In actual measurement of the measurement object, a total spectral radiation factor of the measurement object in the case where the measurement object is irradiated with illumination light having an intended spectral intensity distribution is obtained, based on the measurement data, and based on the stored factor of ambient light (namely, based on the two spectral intensity distributions different from each other). Accordingly, in the thus configured optical characteristic measuring apparatus and method, it is possible to obtain a color value by calculating (converting) a total spectral reflectance factor of a measurement object in an ambient light condition, based on a measurement result on a total spectral radiation factor derived from illumination light output from a simulative illumination light source for testing provided with the first and second light sources.

Further, the optical characteristic measuring apparatus having one of the configurations may be further provided with a diffuser plate configured to cover the measurement opening for measuring a spectral intensity distribution of the ambient light. The diffuser plate may be detachably attached to the measurement opening while being held on an attachment.

According to the above configuration, it is possible to reduce a variation of ambient light entering through the measurement opening depending on the incident position of the ambient light by covering the measurement opening with the diffuser plate. This is advantageous in enhancing the measurement precision of the light source measuring section. Further, the diffuser plate is detachably attached to the measurement opening while being held on the attachment for covering the measurement opening with the diffuser plate. Accordingly, in the thus configured optical characteristic measuring apparatus, the operator can easily switch between the ambient light measurement mode and the object color measurement mode. The spectral transmittance of the diffuser plate may be stored in advance in the storing section, and the spectral transmittance of the diffuser plate may be compensated (subtracted) in obtaining a spectral intensity distribution of ambient light by the light source measuring section.

Further, the optical characteristic measuring apparatus having one of the configurations may be further provided with a setting section configured to set identification information corresponding to a measurement result by the light source measuring section in storing the measurement result into the storing section.

According to the above configuration, the identification information corresponding to the measurement result such as the name of the measurement site is added to the measurement result. Accordingly, in the thus configured optical characteristic measuring apparatus, the operator can easily designate the observation light source and the testing illumination light.

Further, in the optical characteristic measuring apparatus having one of the configurations, the storing section may be configured to store measurement results on a plurality of ambient light by the light source measuring section.

In the thus configured optical characteristic measuring apparatus, it is not necessary to measure a spectral intensity distribution of ambient light, each time the ambient light changes, by reading out one of the measurement results on the plurality of ambient light for use, as necessary. This is advantageous in enhancing the operability. Further, as described above, adding the identification information such as the name of the measurement site makes it easy for the operator to designate one of the plurality of ambient light. This is particularly advantageous in the aspect of operability.

Further, in the optical characteristic measuring apparatus having one of the configurations, the light source measuring section and the spectral measuring section may be provided with a circular mask configured to form the measurement opening; a lens configured to collect light passing through the circular mask; an optical fiber having a predetermined length for eliminating a variation of light collected on the lens depending on an incident position of the light; and a polychromator unit configured to guide emission light from the optical fiber into an incident opening of the polychromator unit. The illumination light source may be disposed on a side opposite to the lens with respect to an incident end of the optical fiber. The optical characteristic measuring apparatus may be further provided with a reflecting member configured to reflect the illumination light from the illumination light source in a direction toward the measurement opening, the reflecting member having a hemispherical shape; and a cylindrical toroidal mirror configured to irradiate the measurement object with light reflected from the reflecting member in a direction from an outside of the circular mask. An illumination optical system and a light receiving optical system may have 45°a : 0° geometry.

According to the above configuration, incident light beams in different directions are mixed with each other within the optical fiber having the predetermined length. Accordingly, the thus configured optical characteristic measuring apparatus is advantageous in eliminating a variation of light collected on the lens depending on the incident position of the light with respect to the optical fiber.

Further, according to the above configuration, the illumination optical system and the light receiving optical system have 45°a : 0° geometry (where the symbol "a" stands for annular) for illuminating the measurement object from all around. Accordingly, the thus configured optical characteristic measuring apparatus is advantageous in reducing an influence by inclination of a sample surface or anisotropy.

This application is based on Japanese Patent Application No. 2011-079393 filed on March 31, 2011, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## INDUSTRIAL APPLICABILITY

According to the invention, it is possible to provide an optical characteristic measuring apparatus and an optical characteristic measuring method capable of obtaining a color value in an intended ambient light condition by a single apparatus with ease.

## Claims

1. An optical characteristic measuring apparatus for obtaining a color value of a measurement object, comprising
   a light source measuring section which measures a spectral intensity distribution of predetermined ambient light entering through a measurement opening;
   a storing section which stores a measurement result by the light source measuring section;
   an illumination light source which irradiates the measurement object facing the measurement opening with illumination light whose spectral intensity distribution is measured in advance;
   a spectral measuring section which measures a spectral reflectance factor of the measurement object, based on reflected light from the measurement object irradiated with the illumination light; and
   a computing section which obtains a color value of the measurement object in a condition of ambient light having a spectral intensity distribution stored in the storing section, based on the measured spectral reflectance factor.

2. An optical characteristic measuring apparatus for obtaining a total spectral radiation factor of a measurement object, comprising:

   a light source measuring section which measures a spectral intensity distribution of predetermined ambient light entering through a measurement opening;
   a storing section which stores a measurement result by the light source measuring section;
   an illumination light source which irradiates the measurement object facing the measurement opening with illumination light whose spectral intensity distribution is measured in advance, the illumination light source including a first light source configured to generate visible light, and a second light source configured to generate light including at least light in an ultraviolet wavelength range and capable of exciting an fluorescent substance, in a case that the measurement object is a fluorescent sample;
   a spectral measuring section which measures a total spectral radiation factor of the measurement object, based on reflected light from the measurement object in a case that the first light source and the second light source are used; and

a computing section which obtains a total spectral radiation factor of the measurement object in a condition of ambient light, based on the total spectral radiation factor of the measurement object measured by irradiation of the illumination light having two different spectral intensity distributions, and based on a spectral intensity distribution of ambient light stored in the storing section.

3. The optical characteristic measuring apparatus according to Claim 1 or Claim 2, further comprising:

a diffuser plate configured to cover the measurement opening for measuring a spectral intensity distribution of the ambient light, wherein

the diffuser plate is detachably attached to the measurement opening while being held on an attachment.

4. The optical characteristic measuring apparatus according to Claim 1 or Claim 2, further comprising:

a setting section configured to set identification information corresponding to a measurement result by the light source measuring section in storing the measurement result into the storing section.

5. The optical characteristic measuring apparatus according to Claim 1 or Claim 2, wherein
the storing section is configured to store measurement results on a plurality of ambient light by the light source measuring section.

6. The optical characteristic measuring apparatus according to Claim 1 or Claim 2, wherein
the light source measuring section and the spectral measuring section are provided with:

a circular mask configured to form the measurement opening;
a lens configured to collect light passing through the circular mask;
an optical fiber having a predetermined length for eliminating a variation of light collected on the lens depending on an incident position of the light; and
a polychromator unit configured to guide emission light from the optical fiber into an incident opening of the polychromator unit,
the illumination light source is disposed on a side opposite to the lens with respect to an incident end of the optical fiber,
the optical characteristic measuring apparatus further comprises:

a reflecting member configured to reflect the illumination light from the illumination light source in a direction toward the measurement opening, the reflecting member having a hemispherical shape; and
a cylindrical toroidal mirror configured to irradiate the measurement object with light reflected from the reflecting member in a direction from an outside of the circular mask, and
an illumination optical system and a light receiving optical system have 45°a : 0° geometry.

7. An optical characteristic measuring method for obtaining a color value of a measurement object, comprising:

a step of measuring and storing a spectral intensity distribution of predetermined ambient light;
a step of measuring a spectral reflectance factor of the measurement object, with use of illumination light from an illumination light source, the illumination light having a spectral intensity distribution measured in advance; and
a step of obtaining a color value of the measurement object in a condition of ambient light having the stored spectral intensity distribution, based on the measured spectral reflectance factor.

8. An optical characteristic measuring method for obtaining a total spectral radiation factor of a measurement object, comprising:

a step of measuring and storing a spectral intensity distribution of predetermined ambient light;
a step of measuring a total spectral radiation factor of the measurement object, with use of illumination light from a first light source configured to generate visible light, a spectral intensity distribution of the illumination light being measured in advance, and with use of illumination light from a second light source configured to generate light including at least light in an ultraviolet wavelength range and capable of exciting a fluorescent substance, in a case that the measurement object is a fluorescent sample; and

a step of obtaining a total spectral radiation factor of the measurement object in a condition of ambient light, based on the total spectral radiation factor of the measurement object measured by irradiation of the illumination light having two different spectral intensity distributions, and based on the stored spectral intensity distribution of ambient light.

## FIG. 1A

## FIG. 1B

# FIG. 2

WHITE LED

SAMPLE

EP 2 693 179 A1

FIG. 3

EP 2 693 179 A1

FIG. 4

WHITE LED

2    1    3

102

103

6

EP 2 693 179 A1

# FIG. 5

SET TO LIGHT SOURCE
MEASUREMENT MODE

SET SPECTRAL PROFILE
OF AMBIENT LIGHT — S1

STORE SPECTRAL
PROFILE INTO MEMORY — S2

END

SET TO OBJECT COLOR
MEASUREMENT MODE

SELECT OBSERVATION
LIGHT SOURCE — S11

MEASURE COLOR OF
MEASUREMENT OBJECT — S12

END

H1

| MEASUREMENT MODE |
| --- |
| → AMBIENT LIGHT MEASUREMENT<br>OBJECT COLOR MEASUREMENT<br><br>MENU |

H2

| MENU |
| --- |
| → OBSERVATION LIGHT SOURCE<br>OBSERVING FIELD OF VIEW<br>COLOR SYSTEM<br>: |

H3

| OBSERVATION LIGHT SOURCE |
| --- |
| → MEASUREMENT ROOM<br>A<br>C<br>D50<br>: |

H4

| OBSERVATION LIGHT SOURCE |
| --- |
| → A<br>C<br>D50<br>:<br>: |

H5

| AMBIENT LIGHT MEASUREMENT |
| --- |
| → Ev:<br>Tp: |
| PRESS MEASUREMENT BUTTON |

H6

| AMBIENT LIGHT MEASUREMENT |
| --- |
| → Ev : 500lx<br>Tp : 3500k |
| DATA IS TO BE STORED? |

H7

| AMBIENT LIGHT DATA STORAGE |
| --- |
| → INPUT NAME<br><br>■ |
| AFTER INPUT, PRESS OK BUTTON |

H8

| OBJECT COLOR MEASUREMENT |
| --- |
| → L∗:<br>a∗:<br>b∗: |
| PRESS MEASUREMENT BUTTON |

H9

| OBJECT COLOR MEASUREMENT |
| --- |
| → L∗:87.02<br>a∗:30.23<br>b∗:18.18 |
| LIGHT SOURCE: MEASUREMENT ROOM<br>FIELD OF VIEW: 10° |

H10

| OBJECT COLOR MEASUREMENT |
| --- |
| → MEASUREMENT   ILLUMINATION<br>ROOM            BOOTH<br>L∗:87.02      L∗:87.13<br>a∗:30.23      a∗:30.20<br>b∗:18.18      b∗:18.84 |

H11

| OBJECT COLOR MEASUREMENT |
| --- |
| → ΔE00: +0.84  MEASUREMENT ROOM<br>ΔL∗: +0.11  L∗:87.02<br>Δa∗: −0.03  a∗:32.23<br>Δb∗: +0.66  b∗:18.18 |
| LIGHT SOURCE: ILLUMINATION BOOTH<br>FIELD OF VIEW: 10° |

FIG. 6

# FIG. 7

1a

22
21
2a
24
23

WHITE LED

341

32  33  34  35
3

SAMPLE

4

351
342

352

353

EP 2 693 179 A1

# FIG. 8

```
┌─────────────────────────┐
│  SET TO AMBIENT LIGHT    │
│   MEASUREMENT MODE       │
└─────────────────────────┘
            │
            ▼
┌─────────────────────────┐  S1
│  SET SPECTRAL PROFILE    │
│    OF AMBIENT LIGHT      │
└─────────────────────────┘
            │
            ▼
┌─────────────────────────┐  S2
│    STORE SPECTRAL        │
│  PROFILE INTO MEMORY     │
└─────────────────────────┘
            │
            ▼
       ┌─────────┐
       │   END   │
       └─────────┘
```

```
┌─────────────────────────┐
│  SET TO OBJECT COLOR     │
│   MEASUREMENT MODE       │
└─────────────────────────┘
            │
            ▼
┌─────────────────────────┐  S11
│   SELECT OBSERVATION     │
│     LIGHT SOURCE         │
└─────────────────────────┘
            │
            ▼
┌─────────────────────────┐  S13
│    SELECT TESTING        │
│ ILLUMINATION LIGHT SOURCE│
└─────────────────────────┘
            │
            ▼
┌─────────────────────────┐  S12
│    MEASURE COLOR OF      │
│  MEASUREMENT OBJECT      │
└─────────────────────────┘
            │
            ▼
       ┌─────────┐
       │   END   │
       └─────────┘
```

<div align="center">

**INTERNATIONAL SEARCH REPORT**

</div>

| | International application No. |
|---|---|
| | PCT/JP2012/002067 |

**A.  CLASSIFICATION OF SUBJECT MATTER**
*G01J3/50*(2006.01)i, *G01J3/443*(2006.01)i

According to International Patent Classification (IPC) or to both national classification and IPC

**B.  FIELDS SEARCHED**

Minimum documentation searched (classification system followed by classification symbols)
G01J3/00-G01J3/52, G01N21/00-G01N21/61

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X<br>Y | JP 2003-337067 A  (Telecommunications Advancement Organization of Japan), 28 November 2003 (28.11.2003), paragraphs [0046] to [0048], [0054], [0056] to [0059], [0069] to [0070], [0088] | 1-2,7-8<br>3-6 |
| Y | JP 2009-181449 A  (Sharp Corp.), 13 August 2009 (13.08.2009), fig. 2; paragraphs [0025] to [0034] | 3 |
| Y<br>A | JP 2005-201694 A  (Olympus Corp.), 28 July 2005 (28.07.2005), paragraphs [0047] to [0048], [0124] to [0126], [0133] | 4-5<br>2,8 |

| ☒  Further documents are listed in the continuation of Box C. | ☒  See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 April, 2012 (13.04.12) | 24 April, 2012 (24.04.12) |

| Name and mailing address of the ISA/<br>    Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
|---|
| PCT/JP2012/002067 |

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2010/021266 A1  (Konica Minolta Sensing, Inc.), 25 February 2010 (25.02.2010), paragraphs [0022] to [0026], [0034], [0046]; fig. 1, 4, 7 | 6 |

Form PCT/ISA/210 (continuation of second sheet) (July 2009)

**INTERNATIONAL SEARCH REPORT**
Information on patent family members

International application No.

PCT/JP2012/002067

| | | | |
|---|---|---|---|
| JP 2003-337067 A | 2003.11.28 | JP 4174707 B2 | 2008.11.05 |
| JP 2009-181449 A | 2009.08.13 | JP 2009-182845 A<br>WO 2009/096232 A1 | 2009.08.13<br>2009.08.06 |
| JP 2005-201694 A | 2005.07.28 | (Family: none) | |
| WO 2010/021266 A1 | 2010.02.25 | (Family: none) | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO62284225 A
- JP 2006292510 A
- JP 2011079393 A